# EUROPÄISCHE PATENTSCHRIFT

(11) **EP 4 323 309 B1**
(45) Veröffentlichungstag und Bekanntmachung des Hinweises auf die Patenterteilung: **19.03.2025**
(21) Anmeldenummer: 22716519.8
(22) Anmeldetag: 07.04.2022
(51) Int. Cl.: C01B 25/02, B01J 8/00, B09B 3/00, C01B 25/01, C02F 11/00

(54) **VERFAHREN ZUM ABTRENNEN VON ELEMENTAREM PHOSPHOR AUS EISENOXID-HALTIGEN UND PHOSPHAT-HALTIGEN STOFFEN**
METHOD FOR SEPARATING ELEMENTAL PHOSPHORUS FROM IRON OXIDE-CONTAINING AND PHOSPHATE-CONTAINING SUBSTANCES
PROCÉDÉ DE SÉPARATION DU PHOSPHORE ÉLÉMENTAIRE À PARTIR DE SUBSTANCES CONTENANT DE L'OXYDE DE FER ET DES PHOSPHATES

(30) Priorität: 14.04.2021 AT 601122021; 17.05.2021 AT 601452021; 17.06.2021 AT 1132021
(43) Veröffentlichungstag der Anmeldung: 21.02.2024
(73) Patentinhaber: Radmat AG, 5442 Fislisbach (CH)
(72) Erfinder: EDLINGER, Alfred, 6781 Bartholomäberg (AT)
(74) Vertreter: SONN Patentanwälte GmbH & Co KG
(86) Internationale Anmeldenummer: PCT/IB2022/053262
(87) Internationale Veröffentlichungsnummer: WO 2022/219466

(56) Entgegenhaltungen:
- WO-A1-2020/225760
- WO-A1-2021/152386

## Beschreibung

Die vorliegende Erfindung betrifft ein Verfahren zum Abtrennen von elementarem Phosphor aus Eisenoxid-haltigen und Phosphat-haltigen Stoffen, insbesondere aus Abfallstoffen wie Klärschlamm(asche), Tiermehl, Knochenmehl und/oder Stahlwerksschlacke bevorzugt zusammen mit Stoffen wie Apatit, Phosphaterzen und/oder Phosphorit, sowie eine Vorrichtung zur Durchführung des erfindungsgemäßen Verfahrens.

Die Veröffentlichungen WO 2020/225760 A1 und WO 2021/152386 A1 bilden den technischen Hintergrund zum Gegenstand der vorliegenden Erfindung.

Die Preise für Rohphosphat erfahren in letzter Zeit aufgrund der Verknappung geeigneter Rohstoffquellen eine ständige Steigerung. Zudem weisen die ausgebeuteten Phosphaterze zunehmend bedeutende Gehalte von Uran, Cadmium, Selen und weiteren gesundheitsschädlichen Begleitstoffe auf. Derartige Begleitelemente können nur mit sehr großem Aufwand entfernt werden, sodass die Verwendung von Phosphaten aus solcherart belasteten Erzen immer unwirtschaftlicher wird.

Andererseits finden sich in Abfallstoffen teilweise relativ große Gehalte an Phosphor-Verbindungen. Dies trifft beispielsweise auf Klärschlamm, Tiermehl, Knochenmehl und/oder Stahlwerksschlacke und dergleichen zu.

Insbesondere für die Lebensmittelherstellung und für die pharmazeutische Industrie werden hochreine Phosphor-Ausgangsstoffe benötigt, die aus elementarem Phosphor (P₄, weißer Phosphor) darstellbar sind. Die Herstellung gestaltet sich jedoch zunehmend schwierig und wird zumindest in Europa derzeit nicht mehr durchgeführt.

Ein wesentliches Problem bei der Gewinnung von elementarem Phosphor aus den Ausgangsstoffen der eingangs genannten Art, insbesondere aus Abfallstoffen wie Klärschlamm, Tiermehl, Knochenmehl und/oder Stahlwerksschlacke und/oder aus Stoffen wie Apatit, Phosphaterzen und/oder Phosphorit, liegt in der Bildung von Phosphorschlamm, der sich beispielsweise beim Wöhlerprozess aus Silikat- und Kohlenstoff-haltigen Begleitstoffen der Eisenoxid-haltigen und Phosphat-haltigen Stoffe unter Einbindung von verschiedenen Phosphorspezies bildet. Phosphorschlamm ist hochgiftig und stellt ein immenses Problem dar, da seine Entsorgung die Gewinnung von elementarem Phosphor mit bisher bekannten Verfahren aus wirtschaftlicher Sicht mehr oder weniger aussichtslos erscheinen lässt. Darüberhinaus stellt bei herkömmlichen Verfahren zur Gewinnung von elementarem Phosphor die Bildung von Phosphinen (insbesondere PH₃, im Zusammenhang mit der vorliegenden Erfindung auch allgemein PHₓ), die als geruchloses Gas flüchtig und in hohem Maße toxisch sind, ein großes Problem dar.

Der vorliegenden Erfindung liegt daher die Aufgabe zugrunde, ein Verfahren sowie eine entsprechende Vorrichtung zu schaffen, die die Gewinnung von elementarem Phosphor aus den genannten Ausgangsstoffen ermöglichen, ohne dass es zur Bildung von Phosphorschlamm oder Phosphinen kommt. Zugleich sollen die Bildung von unerwünschten Eisen-Phosphor-Legierungen wie Eisenphosphiden, Ferrophos und Fe₂P sowie CO₂-Emissionen gegenüber Verfahren aus dem Stand der Technik vermieden werden.

Zur Lösung dieser Aufgabe umfasst das erfindungsgemäße Verfahren zumindest die Schritte nach Anspruch 1.

Bei dem erfindungsgemäßen Verfahren werden die Ausgangsstoffe zusammen mit zumindest einem Aluminiumträger aufgeschmolzen. In der resultierenden Schmelze, die eine Aluminium-haltige Phosphatschlackenschmelze ist und gegebenenfalls schon anfangs Aluminiumoxid enthalten kann, kommt es in der Folge zu einer exothermen Freisetzung von elementarem Phosphor (P₂, gasförmig) und metallischem Eisen. Das erfindungsgemäße Verfahren nützt somit eine autotherme Redoxreaktion zwischen den in verschiedenen Reduktionsstufen vorliegenden Redoxpartnern Eisenoxid, Phosphoroxid (Phosphat) und Aluminium, wobei die Redoxreaktion stark exotherm ist und die Reaktion somit von selbst aufrecht erhalten wird.

Die Phosphatschlacke bildet in der Schmelzphase leicht bewegliche, elektrisch leitende Kationen- und Anionencluster (Ionenkomplexe). Beispielsweise werden Kationencluster aus Fe²⁺, Ca²⁺, Mg²⁺, Na⁺, K⁺ und dergleichen sowie Anionencluster beispielsweise aus PO4³⁻, SiO³⁻, SiO₄⁴⁻, SiO₃²⁻ und AlO₃³⁻ gebildet. Eine bewusste elektrothermische (Schmelzfluss-Elektrolyse) und/oder alutherme Teilreduktion der Phosphoroxide der Phosphatschlackenschmelze führt zu einer extrem rasch verlaufenden Reduktion der Phosphate zu gasförmigen P₂ und der Eisenoxide zu metallischem Eisen. Hierbei werden aufgrund der Exothermie des erfindungsgemäßen Verfahrens große Wärmemengen frei, sodass die Reaktion von selbst aufrechterhalten wird und gegebenenfalls gekühlt werden muss.

In vorteilhafter Weise kann es vorgesehen sein, dass als Aluminiumträger Aluminium-Krätze eingesetzt wird. Krätze fällt bei der Elektrolyse von Tonerde zur Herstellung von metallischem Aluminium an oder aber auch beim Einschmelzen von Altaluminium. Die Krätze besteht aus metallischem Aluminium, welches jedoch von einer Aluminiumoxid-Haut umgeben ist. Die Krätze bildet sich aufgrund der Oxidation des Aluminiums zu Aluminiumoxid an der Oberfläche der entsprechenden Elektrolyse- oder Schmelzbecken und ist nur schwer zu entsorgen. Beispielsweise wird versucht, die oxidische Haut durch den Einsatz von Fluoriden abzubauen, dies führt jedoch in naheliegender Weise zu gravierenden weiteren Abfall- und Abluftproblemen dieser Prozesse. Der Einsatz von Krätze beim erfindungsgemäßen Verfahren hat nun den Vorteil, dass neben dem für die Reduktion gewünschten Aluminium auch Aluminiumoxid, also das Reaktionsprodukt des erfindungsgemäßen Verfahrens zugegeben wird, sodass die stark exotherme Reaktion moderiert und die Exothermie dadurch verringert wird. Gleichzeitig wird eine Schlacke mit einem besonders hohen Aluminiumoxid-Gehalt erhalten, was bei Zementen, die diese Schlacke aufweisen, für herausragende Frühfestigkeitswerte sorgt.

Die Umsetzung erfolgt so plötzlich, dass allfällige Zwischenstufen von Phosphor und Verbindungen von Phosphat und Phosphor mit Begleitstoffen der Ausgangsstoffe nicht gebildet werden können und somit die Bildung von Phosphorschlamm und Phosphinen hintangehalten und effektiv vermieden wird. Aluminate und nichtmetallische Begleitstoffe reichern sich in der Schlacke an, während eventuell beispielsweise in Klärschlamm oder Stahlwerksschlacke oder Walzzunder enthaltene Schwermetalle im gebildeten Eisen legieren. Es wird auf diese Weise unmittelbar reiner Phosphor in der Gasphase erhalten, wobei das anfangs gebildete P₂ durch an sich bekannte Kühlverfahren wie Kühlen und Quenchen mit Wasser oder durch indirekte Kühlung mit bevorzugt regenerativen Wärmetauschern zu weiteren Phosphormodifikationen wie P₄ umgesetzt werden kann.

Die gebildete Schlacke kann nach schockartiger Kühlung in der Zementindustrie als hochwertiges hydraulisches Bindemittel eingesetzt werden, wofür der Schlacke gegebenenfalls je nach Anforderung an die Zielanalyse der Schlacke weitere Zuschlagstoffe zugesetzt werden können. Beispielsweise kann durch erhöhte Zugabe von metallischem Aluminium auch der SiO₂-Gehalt der Zielschlacke bei gleichzeitiger Erhöhung des Aluminiumgehaltes gesenkt werden. In diesem Fall entsteht eine FeSi-haltige Eisenschmelze mit etwas erhöhten Aluminiumgehalt. Diese Eisenlegierung kann in vorteilhafter Weise in der Stahlmetallurgie als Desox-Legierungszugabe eingesetzt werden.

Hinsichtlich der Vermengung der Ausgangsstoffe sowie des Aluminiumträgers kann gemäß einer bevorzugten Ausführungsform der vorliegenden Erfindung dergestalt vorgegangen werden, dass der zumindest eine Eisenoxid-haltige und Phosphat-haltige Stoff als Phosphatschlackenschmelze in dem Schmelzgefäß bereitgestellt und der zumindest eine Aluminiumträger in die Phosphatschlackenschmelze zugegeben wird. Die Phosphatschlackenschmelze kann hierbei aus einem oxidativen Verfahren bereits weitgehend schadstofffrei bereitgestellt werden, sodass die Bildung von unerwünschten, giftigen Substanzen von vornherein vermieden wird.

Gemäß einer bevorzugten alternativen Ausführungsform der vorliegenden Erfindung hinsichtlich der Vermengung der Ausgangsstoffe sowie des Aluminiumträgers kann es auch vorgesehen sein, dass als Eisenoxid-haltiger und Phosphat-haltiger Stoff ein Feststoff, insbesondere Klärschlammasche mit einem Kalkträger und/oder Apatit und/oder Phosphaterz, bereitgestellt und dass als der zumindest eine Aluminiumträger festes, metallisches Aluminium zugegeben wird. In diesem Fall wird der Aluminiumträger somit nicht in eine bereits vorhandene Phosphatschlackenschmelze zugegeben, sondern der Ausgangsstoff wird in fester Form mit einem festen Aluminiumträger, dem metallischen Aluminium, beim Zugeben in Kontakt gebracht. Hierbei sind die Stoffe bevorzugt zu feinen Pulvern vermahlen, um eine große Reaktionsoberfläche zur Verfügung zu stellen. Das durch den Schritt des Zugebens erhaltene Gemisch muss anfangs in irgendeiner Weise gezündet werden. Dies kann mit einer Zündkerze oder einer Flamme bewerkstelligt werden oder aber auch durch bereits im Schmelzgefäß vorhandene Phosphatschlackenschmelze erfolgen. Im weiteren Verlauf erhält sich die Reaktion aufgrund der Exothermie der Redoxreaktion von selbst aufrecht.

Wie bereits mehrfach erwähnt, ist die Redoxreaktion zwischen Eisenoxid, Phosphoroxid und Aluminium stark exotherm und es fallen daher bei dem erfindungsgemäßen Verfahren große Wärmemengen an, die es zumeist erfordern, die Reaktion zu kühlen. Neben naheliegenden Möglichkeiten der Kühlung des Schmelzgefäßes beziehungsweise der Phosphatschlackenschmelze durch verschiedenartige Kühlschlangen, Wärmetauscher und dergleichen, kann gemäß einer bevorzugten Ausführungsform der vorliegenden Erfindung zu diesem Zweck auch dergestalt vorgegangen werden, dass der Aluminium-haltigen und gegebenenfalls Aluminiumoxid-haltigen Phosphatschlackenschmelze ein Al₂O₃-Träger zugegeben wird. Al₂O₃ (Aluminiumoxid) ist auch ein Produkt der Redoxreaktion des erfindungsgemäßen Verfahrens. Die Zugabe des, bevorzugt kalten, Aluminiumoxid-Trägers verlagert das Gleichgewicht der Redoxreaktion hin zu den Ausgangsstoffen und hemmt somit die Reaktionsgeschwindigkeit und damit auch die Freisetzung von Wärme. Auf diese Weise kann ein Überhitzen der Phosphatschlackenschmelze beziehungsweise des Schmelzgefäßes am Ort des Freiwerdens von Wärme effektiv vermieden werden, ohne dass reaktionsfremde chemische Spezies in das Verfahren eingebracht werden. Als besonders vorteilhaft ist es in diesem Zusammenhang zu sehen, dass der durch die Zugabe von Al₂O₃ erhöhte Al₂O₃-Anteil der Zielschlacke diese für die Herstellung von schnellbindendem Zement für geeignet erscheinen lässt.

Für eine optimierte Verfahrensführung ist es, vor allem hinsichtlich einer wünschenswerten Viskosität der Schmelze zweckmäßig, dass die Basizität als das Gewichtsverhältnis von CaO/SiO₂ der Aluminium-haltigen und gegebenenfalls Aluminiumoxid-haltigen Phosphatschlackenschmelze auf einen Wert von 0,65 bis 1,4, bevorzugt 0,85 bis 1,2 und insbesondere bevorzugt 1 eingestellt wird, bevorzugt durch Zugabe von CaO-Trägern und/oder SiO2-Trägern, wie dies einer bevorzugten Ausführungsform der vorliegenden Erfindung entspricht. Die chemische Analyse der Zielschlacke zeigt insbesondere die folgenden Anteile der Hauptkomponenten (in Gew.-%):

| | |
|---|---|
| CaO | 22 - 56 |
| Al₂O₃ | 32 - 55 |
| SiO2 | 1 - 22 |
| Fe2O3 | 0,15 - 3 |
| MgO | 2 - 15 |
| P | 0,05 - 1,2 |

Dies entspricht der Richtanalyse eines hochwertigen Tonerde-Schmelzzements.

Erfindungsgemäß wird in dem Schmelzgefäß unter der Aluminium-haltigen und gegebenenfalls Aluminiumoxid-haltigen Phosphatschlackenschmelze ein Zinnbad als Kathodenkörper bereitgestellt und zumindest ein Anodenkörper, bevorzugt aus Graphit, Platin oder Magnetit-Spinell, in die Aluminium-haltige und gegebenenfalls Aluminiumoxid-haltige Phosphatschlackenschmelze eintauchend bereitgestellt. Dies ermöglicht die elektrochemische Beeinflussung des erfindungsgemäßen Verfahrens, wie dies im Folgenden erläutert wird. Die Wahl des Materials für den Anodenkörper kann nach verschiedenen Gesichtspunkten erfolgen. Während Graphitelektroden zweifellos günstig in der Anschaffung sind, werden diese jedoch beim erfindungsgemäßen Verfahren relativ rasch durch naszierenden Sauerstoff unter Bildung von Kohlendioxid abgebaut. Die Bildung von Kohlendioxid ist jedoch aus Klimaschutzgründen zu vermeiden und ein häufiger Anodenwechsel aus wirtschaftlicher Sicht unerwünscht. Es konnte die Beobachtung gemacht werden, dass Anoden aus Platin oder Magnetit und insbesondere aus Magnetit-Spinell zwar insbesondere im Fall von Platin kostspielig sind, dafür aber eine überaus lange Lebensdauer aufweisen. Ein weiterer Vorteil ist darin zu sehen, dass an solchen Elektroden lediglich Sauerstoff und kein Kohlendioxid entsteht.

Um den Einsatz von metallischem Aluminium möglichst zu minimieren, ist erfindungsgemäß vorgesehen, dass ein Gleichstrom, bevorzugt ein Gleichstrom von 3 V bis 15 V, bevorzugt von 6 V bis 12 V, insbesondere bevorzugt von 8 V bis 10 V, an den Kathodenkörper und den Anodenkörper angelegt wird, wie dies einer bevorzugten Ausführungsform der vorliegenden Erfindung entspricht. Dies gestattet es, die Reaktionen über das natürliche chemische Gleichgewicht hinaus durch Elektrolyse anzutreiben. Das gebildete Eisen reichert sich im Zinnbad an und unterschichtet das Zinnbad bei Erreichen der Sättigung des Zinnbads.

Alternativ kann es aber bei an sich aufgrund der Qualität der Ausgangsstoffe und optimaler Einstellung der Basizität der Phosphatschlackenschmelze sowie der Temperatur mehr oder weniger vollständig ablaufender Reaktion auch vorgesehen sein, dass ein Gleichstrom vom Kathodenkörper und vom Anodenkörper abgenommen wird. In diesem Fall liefert das erfindungsgemäße Verfahren elektrische Energie, indem sich eine elektrische Spannung zwischen Anode und Kathode ausbildet, die einen externen Stromfluss auslösen kann, der in jeder erdenklichen Weise eingesetzt werden kann. Gleichzeitig kann über diese galvanische Kette auch eine Messung des Reaktionsfortschrittes in der Phosphatschlackenschmelze durchgeführt werden. Wenn Eisenoxid und Phosphoroxid der Phosphatschlackenschmelze vollständig reduziert sind und in der Elementarform vorliegen, fließt kein Strom mehr. Dementsprechend haben Versuche gezeigt, dass der Stromfluss in Abhängigkeit des Fortschritts der Phosphatschlackenreduktion abnimmt. Weiters zugegebenes Aluminium (metallisches Aluminium) reagiert nicht mehr mit der nun ausreduzierten Phosphatschlackenschmelze.

Um die Produkte der Kathodenreaktion und der Anodenreaktion gesondert gewinnen zu können, ist es gemäß einer bevorzugten Ausführungsform der vorliegenden Erfindung vorgesehen, dass der Kathodenkörper in einem ersten Bereich des Schmelzgefäßes in einer in einem Teilbereich des Bodens angeordneten Senke in dem Schmelzgefäß bereitgestellt wird und dass der zumindest eine Anodenkörper in einem zweiten, von dem ersten Bereich verschiedenen Bereich des Schmelzgefäßes bereitgestellt wird, und dass gasförmiger Phosphor aus dem ersten Bereich und Sauerstoff aus dem zweiten Bereich abgezogen werden. Dadurch, dass der Kathodenkörper in einem Bereich angeordnet wird, der von jenem Bereich, in dem der Anodenkörper angeordnet ist, verschieden ist, fallen die Produkte der Kathoden- und der Anodenreaktion im Schmelzgefäß beziehungsweise im Gasraum des Schmelzgefäßes örtlich getrennt an und können dadurch auch getrennt abgezogen werden. An der Kathode sind dies Eisen und gasförmiger Phosphor und an der Anode fällt bei einer inerten Anode lediglich Sauerstoff gasförmig an. Das gebildete Eisen reichert sich im Zinnbad an, unterschichtet das Zinnbad bei Erreichen der Sättigung des Zinnbads und kann aus der Senke abgezogen werden.

Die erfindungsgemäße Vorrichtung zur Durchführung des erfindungsgemäßen Verfahrens ist in Anspruch 7 definiert.

In dieser erfindungsgemäßen Vorrichtung können die Aluminiumträger zusammen mit den Eisenoxid-haltige und Phosphat-haltige Stoffe, den Ausgangsstoffe, aufgeschmolzen werden. In der resultierenden Schmelze, die eine Aluminium-haltige und gegebenenfalls Aluminiumoxid-haltige Phosphatschlackenschmelze ist, kommt es entsprechend der Zugabe-Rate des metallischen Aluminiums zu einer exothermen Freisetzung von elementarem Phosphor (P₂, gasförmig) und metallischem Eisen. Die ursprüngliche Phosphatschlackenschmelze ist nach der Reduktion beziehungsweise Umsetzung praktisch phosphor- und eisen-frei. Wenn, wie dies im Zusammenhang mit einer bevorzugten Ausführungsform des erfindungsgemäßen Verfahrens zuvor beschrieben wurde, der zumindest eine Eisenoxid-haltige und Phosphat-haltige Stoff als Phosphatschlackenschmelze in dem Schmelzgefäß bereitgestellt und der zumindest eine Aluminiumträger in die Phosphatschlackenschmelze zugegeben wird, ist die erfindungsgemäße Vorrichtung bevorzugt dadurch gekennzeichnet, dass die Aufgabevorrichtung ein das Gehäuse durchsetzendes erstes Rohr aufweist, in welchem eine Fördereinrichtung, bevorzugt in Form einer Förderschnecke, für zumindest einen Aluminiumträger angeordnet ist. Durch dieses erste Rohr können die Aluminiumträger in das Gehäuse der Vorrichtung und letztlich in die Phosphatschlackenschmelze eingebracht und dort zusammen mit der Phosphatschlackenschmelze aufgeschmolzen werden. Der Reduktionsvorgang der Phosphatschlackenschmelze entspricht der Zugaberate des metallischen Aluminiums.

Gemäß einer zuvor beschriebenen, alternativen Variante der vorliegenden Erfindung, ist es vorgesehen, dass als Eisenoxid-haltiger und Phosphat-haltiger Stoff ein Feststoff, insbesondere Klärschlammasche mit einem Kalkträger und/oder Apatit und/oder Phosphaterz, bereitgestellt und dass als Aluminiumträger festes, metallisches Aluminium zugegeben wird. An dieser Stelle wären auch die Zugabe von Aluminiumschrott, bevorzugt Magnesium-legiert, Phosphat-haltige Stahlschlacke, Phosphat-haltiger Walzwerkszunder und dergleichen als Feststoff denkbar. In diesem Fall ist die erfindungsgemäße Vorrichtung bevorzugt dadurch gekennzeichnet, dass die Aufgabevorrichtung ein das Gehäuse durchsetzendes erstes Rohr aufweist, in welchem ersten Rohr ein zweites Rohr unter Ausbildung eines Ringspaltes, bevorzugt konzentrisch zum ersten Rohr, angeordnet ist, wobei eines des ersten und des zweiten Rohrs zur Aufgabe von Eisenoxid-haltigen und Phosphat-haltigen Stoffen und das andere des ersten und zweiten Rohrs zur Aufgabe von Aluminiumträgern ausgebildet ist und wobei das erste Rohr an seinem das Gehäuse durchsetzenden Ende das zweite Rohr überragt. Diese Aufgabevorrichtung gestattet es, zwei feststoffliche Komponenten, nämlich zum einen den Eisenoxid-haltigen und Phosphat-haltigen Stoff beziehungsweise den Ausgangsstoff sowie den Aluminiumträger zusammen der Vorrichtung aufzugeben, wobei sich aufgrund des Umstandes, dass das erste Rohr an seinem das Gehäuse durchsetzenden Ende das zweite Rohr überragt, in der Aufgabevorrichtung ein Kontakt zwischen den beiden Komponenten hergestellt wird, der zur Ausbildung einer sich autotherm erhaltenden Reaktionsfront führt, an der die Aluminiumträger zusammen mit den Eisenoxid-haltigen und Phosphat-haltigen Stoffen aufgeschmolzen werden und an der die exotherme Reduktionsreaktion einsetzt. Die resultierende Aluminium-enthaltende und gegebenenfalls Aluminiumoxid-haltige Phosphatschlackenschmelze gelangt hierauf in das Innere des Schmelzgefäßes und in die bereits bestehende Phosphatschlackenschmelze, wo die vollständige Umsetzung zu Eisen und elementarem Phosphor erfolgt. Sowohl das erste als auch das zweite Rohr können geeignete Fördermittel aufweisen, um die Komponenten zu fördern. Im Bereich des Endes des zweiten Rohrs kann eine Zündvorrichtung für den Aluminiumträger und den Eisenoxid-haltigen und Phosphat-haltigen Stoff vorgesehen sein, jedoch kann die Zündung des Gemischs der beiden genannten Komponenten auch durch die Hitze der Phosphatschlackenschmelze erfolgen.

Für die elektrochemische Beeinflussung des erfindungsgemäßen Verfahrens ist die Vorrichtung erfindungsgemäß dahingehend ausgebildet, dass die Vorrichtung einen unter der Aluminium-haltigen und gegebenenfalls Aluminiumoxid-haltigen Phosphatschlackenschmelze angeordneten Kathodenkörper und zumindest einen in die Aluminium-haltige und gegebenenfalls Aluminiumoxid-haltige Phosphatschlackenschmelze eintauchenden Anodenkörper aufweist. Der Kathodenkörper und der Anodenkörper sind in bekannter Weise mit elektrischen Leitungen zur Ausbildung eines Stromkreises versehen.

Um die Produkte der Kathodenreaktion und der Anodenreaktion gesondert gewinnen zu können, ist es gemäß einer bevorzugten Ausführungsform der vorliegenden Erfindung vorgesehen, dass der Kathodenkörper in einem ersten Bereich des Schmelzgefäßes in einer im Boden des Schmelzgefäßes angeordneten Senke angeordnet ist und dass der zumindest eine Anodenkörper in einem zweiten, von dem ersten Bereich seitlich beabstandeten Bereich des Schmelzgefäßes angeordnet ist und eine weitere Abzugsvorrichtung in dem zweiten Bereich angeordnet ist. Dadurch, dass der Kathodenkörper in einem Bereich angeordnet wird, der von jenem Bereich, in dem der Anodenkörper angeordnet ist, verschieden ist, fallen die Produkte der Kathoden- und der Anodenreaktion im Schmelzgefäß beziehungsweise im Gasraum des Schmelzgefäßes örtlich getrennt an und können dadurch auch getrennt abgezogen werden. An der Kathode sind dies Eisen und gasförmiger Phosphor und an der Anode fällt bei einer inerten Anode lediglich Sauerstoff gasförmig an. Das gebildete Eisen reichert sich im Zinnbad an, unterschichtet das Zinnbad bei Erreichen der Sättigung des Zinnbads und kann aus der Senke abgezogen werden.

Um eine möglichst vollständige Trennung der Produkte der Kathodenreaktion und der Anodenreaktion im Gasraum der erfindungsgemäßen Vorrichtung zu erreichen, ist die Erfindung bevorzugt dahingehend weitergebildet, dass zwischen dem ersten Bereich und dem zweiten Bereich eine den Gasraum in zwei voneinander getrennte Abschnitte teilende Trennwand in die Aluminium-haltige und gegebenenfalls Aluminiumoxid-haltige Phosphatschlackenschmelze eintaucht. Somit können Produkte der Kathodenreaktion nicht in den ersten Bereich mit der Anode gelangen und umgekehrt und können auf diese Weise getrennt abgezogen werden.

Andererseits kommt es beim Zusammenführen der gasförmigen Produkte der Kathodenreaktion und der Anodenreaktion in einer exothermen Reaktion zur Bildung von überaus reinem P₂O₅. Das bei dieser Reaktion gebildete P₂O₅ ist so rein, dass es durch Hydrolyse direkt in lebensmitteltaugliche Phosphorsäure umgewandelt und dementsprechend genutzt werden kann.

Gemäß einer bevorzugten Ausführungsform der vorliegenden Erfindung ist der Kathodenkörper von einem Zinnbad gebildet. Ein Zinnbad als Kathode hat den Vorteil, dass sich neben dem bei dem erfindungsgemäßen Verfahren in der erfindungsgemäßen Vorrichtung gebildeten Eisen auch Schwermetalle, die unter Umständen beispielsweise in Klärschlamm, Stahlwerksschlacke oder Walzzunder enthalten sein können, im gebildeten Eisen legieren und damit gebunden werden. Sobald das Zinnbad mit Eisen gesättigt ist, unterschichtet das beim erfindungsgemäßen Verfahren gebildete Eisen das Zinnbad und kann abgezogen werden.

Zur Erhöhung der Standzeit der erfindungsgemäßen Vorrichtung ist das Zinnbad in einem in der Senke angeordneten Kohlenstoff-haltigen Körper aufgenommen, wie dies einer bevorzugten Ausführungsform der vorliegenden Erfindung entspricht. Der Kohlenstoff-haltige Körper kann bevorzugt als Graphitkörper ausgebildet sein, oder aus einer Kohlenstoff-haltigen Masse bestehen.

Gemäß einer bevorzugten Ausführungsform der vorliegenden Erfindung kann der Anodenkörper aus Graphit, Platin oder Magnetit-Spinell gebildet sein. Graphitelektroden sind im Stand der Technik weit verbreitet und führen bei der Durchführung des erfindungsgemäßen Verfahrens in der erfindungsgemäßen Vorrichtung zur Bildung von CO und gegebenenfalls CO₂ an der Anode. Das CO (Kohlenmonoxid) kann in der Folge thermisch verwertet werden. Die Graphitanode wird hierbei verbraucht und muss regelmäßig erneuert werden. Die Vorteile der anderen beschriebenen Anodenmaterialien wurden bereits oben im Zusammenhang mit dem erfindungsgemäßen Verfahren erläutert.

Um einen CO-freien Prozess zu gestatten, kann die Erfindung gemäß einer alternativen Ausführungsform dahingehend weitergebildet sein, dass der zumindest eine Anodenkörper aus einem hochlegierten Stahl gebildet ist, wobei der Stahl bevorzugt mit Platin beschichtet ist. Eine Platinbeschichtung erhöht die an sich schon gute Lebensdauer einer Anode aus hochlegiertem Stahl und bietet darüberhinaus katalytische Eigenschaften.

Weiters ist auch der Einsatz einer Söderberg-Elektrode als Anodenkörper denkbar.

Wie bereits erwähnt, werden bei der Durchführung des erfindungsgemäßen Verfahrens in der erfindungsgemäßen Vorrichtung große Wärmemengen frei, was mitunter die Apparaturen in Mitleidenschaft ziehen kann. Um dem vorzubeugen, kann der zumindest eine Anodenkörper kühlbar ausgebildet sein, bevorzugt durch innen im Kathodenkörper angeordnete Kanäle für eine Zinn-Schmelze, eine Salzschmelze oder Natrium-Schmelze oder für eine Gaskühlung, bevorzugt durch Stickstoff oder Argon, wie dies einer bevorzugten Ausführungsform der vorliegenden Erfindung entspricht

Wie bereits zuvor beschrieben, ist es erfindungsgemäß vorgesehen, dass ein Gleichstrom, bevorzugt ein Gleichstrom von 3 V bis 15 V, bevorzugt von 6 V bis 12 V, insbesondere bevorzugt von 8 V bis 10 V, an den Kathodenkörper und den Anodenkörper angelegt wird, um den Einsatz von Aluminium möglichst zu minimieren. Dies gestattet es, die Reaktionen über das natürliche chemische Gleichgewicht hinaus durch Elektrolyse anzutreiben. Hierzu weist die Vorrichtung gemäß einer bevorzugten Ausführungsform der vorliegenden Erfindung Mittel zum Anlegen eines Gleichstroms an den Kathodenkörper und den Anodenkörper auf.

Alternativ kann es aber bei an sich aufgrund der Qualität der Ausgangsstoffe und optimaler Einstellung der Basizität der Phosphatschlackenschmelze sowie der Temperatur mehr oder weniger vollständig ablaufender Reaktion erfindungsgemäß auch vorgesehen sein, dass ein Gleichstrom vom Kathodenkörper und vom Anodenkörper abgenommen wird. In diesem Fall liefert das erfindungsgemäße Verfahren elektrische Energie, die in jeder erdenklichen Weise eingesetzt werden kann. Hierzu weist die Vorrichtung Mittel zum Abnehmen eines Gleichstroms vom Kathodenkörper und vom Anodenkörper auf, wie dies einer bevorzugten Ausführungsform der vorliegenden Erfindung entspricht. Die Anodenreaktion kann hierbei wie folgt angegeben werden:

Al -> Al³⁺ + 3 e⁻

Dies stellt eine Elektronen-abgabe und folglich eine Oxidation metallischen Aluminiums dar.

Die Kathodenreaktionen können hierbei wie folgt angegeben werden:

P³⁺ + 3e⁻ -> P

Fe³⁺+ 3 e⁻ -> Fe

Dies stellt eine Elektronen-Aufnahme und somit eine Reduktion der Eisenoxide und Phosphoroxide dar.

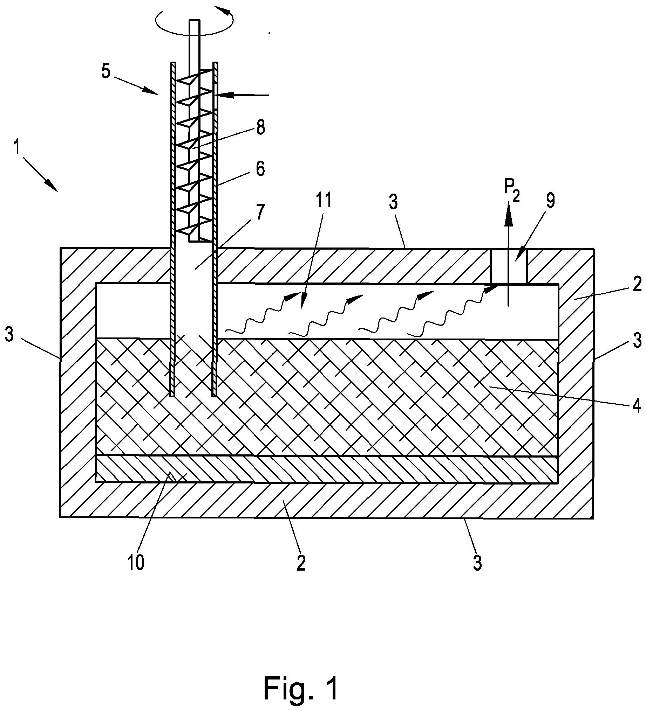

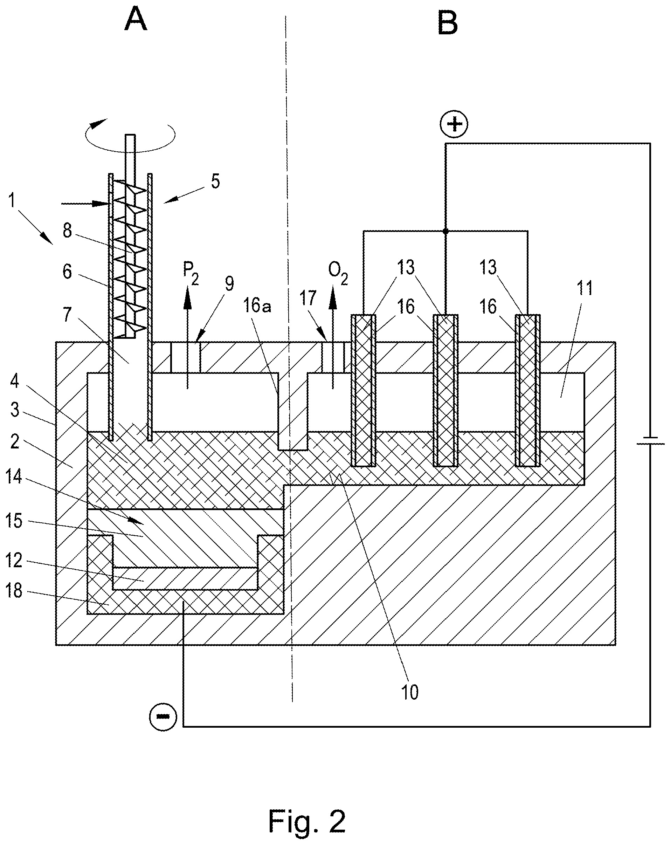

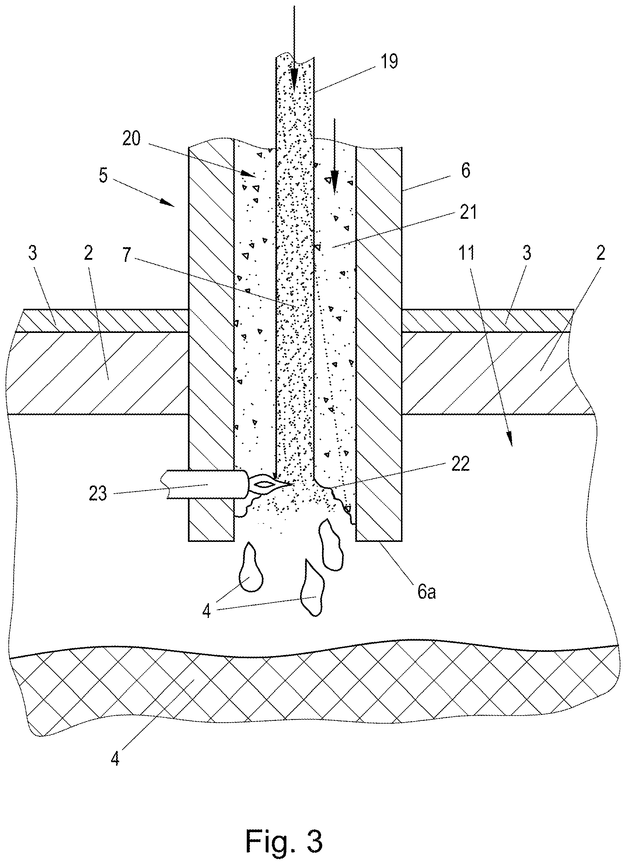

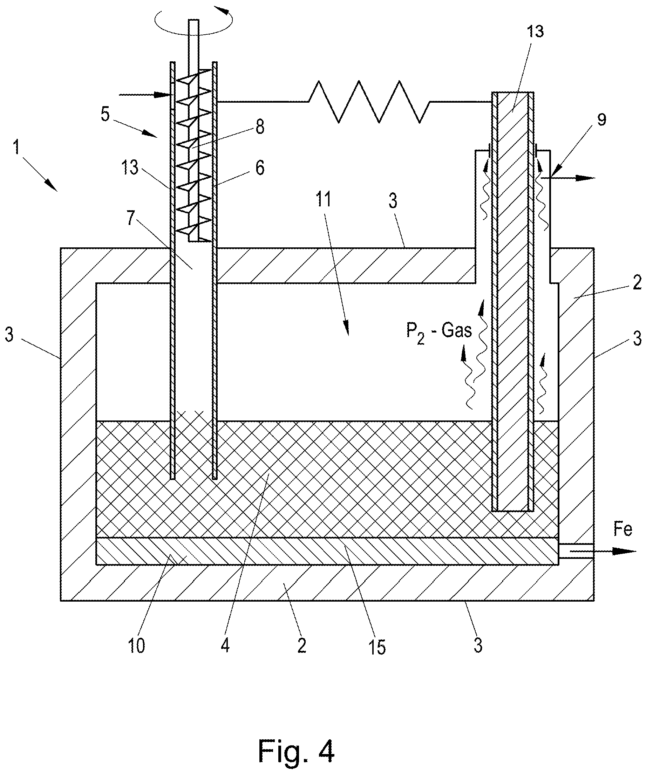

Die Erfindung wird nachfolgend anhand eines in der Zeichnung dargestellten Ausführungsbeispiels näher erläutert. In dieser zeigen Figur 1 eine schematische Darstellung einer ersten erfindungsgemäßen Vorrichtung, Figur 2 eine Darstellung einer erfindungsgemäßen Vorrichtung mit einem Kathodenkörper und mehreren Anodenkörpern, Figur 3 eine Aufgabevorrichtung gemäß einer ersten Ausführungsform der erfindungsgemäßen Vorrichtung, bevorzugt für die Vorrichtung gemäß Figur 1, und Fig. 4 eine Ausführungsform der vorliegenden Erfindung, bei der ein Gleichstrom an den Elektroden abgenommen werden kann.

In Figur 1 ist die erfindungsgemäße Vorrichtung mit dem Bezugszeichen 1 versehen. Die Vorrichtung 1 umfasst ein mit einem Feuerfestmaterial 2 zugestelltes Gehäuse 3 aus Baustahl-Blech zur Ausbildung eines Schmelzgefäßes 11. Ein für die vorliegende Erfindung geeignetes Feuerfestmaterial wurde mit Magnesiumspinell in einer Al₂O₃-Matrix gefunden, welches Material als gesinterter Feuerbeton bekannt ist. Korund-Steine sind ebenfalls als Feuerfestmaterial geeignet. In dem Gehäuse ist Phosphatschlackenschmelze 4 als die Eisenoxid-haltigen und Phosphat-haltigen Stoffe angeordnet. Eine Aufgabevorrichtung 5 der Vorrichtung 1 durchsetzt mit einem ersten Rohr 6 das Gehäuse 3. Durch das erste Rohr 6 der Aufgabevorrichtung 5 können Aluminiumträger 7 oder metallisches Aluminium enthaltende Al₂O₃-Trägeraufgegeben werden, was durch eine Fördereinrichtung 8 in Form einer Förderschnecke bewerkstelligt wird. Die Aufgabevorrichtung 5 taucht in die Phosphatschlackenschmelze 4 ein, wodurch die Aluminiumträger 7 direkt in die Tiefe der Phosphatschlackenschmelze gelangen und dort zusammen mit den Eisenoxid-haltigen und Phosphat-haltigen Stoffe, nämlich der Phosphatschlackenschmelze 4 aufgeschmolzen und rasch zu elementarem Phosphor und Eisen umgesetzt werden. Der Phosphor wird über die Abzugsvorrichtung 9 abgezogen und das Eisen sammelt sich am Boden 10 des Schmelzgefäßes 11. Dort kann das Eisen abgestochen werden. Die Phosphatschlackenschmelze 4 wandelt sich ohne die Zugabe weiterer Ausgangsstoffe zu Phosphat-freier Zementschlacke um.

In Figur 2 sind gleiche Teile mit gleichen Bezugszeichen versehen. Die Vorrichtung 1 gemäß Figur 2 weist einen unter der Aluminium-haltigen Phosphatschlackenschmelze 4 angeordneten Kathodenkörper 15 und mehrere in die Aluminium-haltige Phosphatschlackenschmelze 4 eintauchenden Anodenkörper 13 auf, wobei der Kathodenkörper 15 von einem Zinnbad gebildet ist. Das Zinnbad ist hierbei in einer Senke 14 im Boden 10 des Schmelzgefäßes 11 angeordnet und wird bei fortschreitender Reaktion von dem gebildeten Eisen unterschichtet. Das Zinnbad ist in einem in der Senke angeordneten Graphitkörper 18 aufgenommen. Eine sich unter dem Kathodenkörper 15 ausbildende Eisenschicht ist mit dem Bezugszeichen 12 bezeichnet. Die Einleitung des Stroms erfolgt dann durch den Graphitkörper 18, die Eisenschicht 12 und das Zinnbad 15. Die Anodenkörper 13 können aus Graphit oder hochlegierten Stählen gebildet und gegebenenfalls mit einer Beschichtung 16 versehen sein.

Der Kathodenkörper 15 ist in einem ersten Bereich A des Schmelzgefäßes 11 angeordnet, wobei der erste Bereich A durch eine Trennwand 16a, die in die Phosphatschlackenschmelze 4 eintaucht, von einem zweiten Bereich B abgetrennt, der seitlich vom Bereich A beabstandet ist. An der Abzugsvorrichtung 9 wird elementarer Phosphor in Form von P₂ abgezogen und an einer dem zweiten Bereich B zugeordneten, weiteren Abzugsvorrichtung 17 entweicht im Falle von beschichteten Anodenkörpern Sauerstoff (O₂). An die Kathode und die Anode wird in bekannter Weise ein Gleichstrom angelegt.

Die Aufgabevorrichtung 5 gemäß Figur 3 weist ein das Gehäuse 3 durchsetzendes erstes Rohr 6 auf, in welchem ersten Rohr 6 ein zweites Rohr 19 unter Ausbildung eines Ringspaltes 20 konzentrisch zum ersten Rohr 6 angeordnet ist. Das erste Rohr 6 überragt an seinem das Gehäuse 3 durchsetzenden Ende 6a das zweite Rohr 19**.** Zwei feststoffliche Komponenten, nämlich zum einen der Eisenoxid-haltigen und Phosphat-haltige Stoff 21 beziehungsweise der Ausgangsstoff 21 sowie ein Aluminiumträger 7, in diesem Fall metallisches Aluminium, die zusammen der Vorrichtung aufgegeben werden, geraten miteinander in Kontakt, was zur Ausbildung einer sich autotherm erhaltenden Reaktionsfront 22 führt, an der die Aluminiumträger 7 zusammen mit dem Eisenoxid-haltigen und Phosphat-haltigen Stoff 21 aufgeschmolzen werden. Die resultierenden Aluminium- und Aluminiumoxid enthaltende Phosphatschlackenschmelze 4 ist durch Tropfen versinnbildlicht und gelangt hierauf in das Innere des Schmelzgefäßes und in die bereits bestehende Phosphatschlackenschmelze, wo die vollständige Umsetzung zu Eisen und elementarem Phosphor erfolgt. Im Bereich des Endes 6a des zweiten Rohrs 6 kann eine Zündvorrichtung 23 für den Aluminiumträger 7 und den Eisenoxid-haltigen und Phosphat-haltigen Stoff 21 vorgesehen sein.

In der Darstellung gemäß Figur 4, ist der Anodenkörper 13 rund um das erste Rohr 6 der Aufgabevorrichtung 5 angeordnet und es sind Mittel vorgesehen zum Abnehmen eines Gleichstroms vom Kathodenkörper 15 und vom Anodenkörper 13**.**

## Patentansprüche

1. Verfahren zum Abtrennen von elementarem Phosphor aus Eisenoxid-haltigen und Phosphat-haltigen Stoffen, insbesondere aus Abfallstoffen wie Klärschlamm(asche), Tiermehl, Knochenmehl und/oder Stahlwerksschlacke bevorzugt zusammen mit Stoffen wie Apatit, Phosphaterzen und/oder Phosphorit, umfassend zumindest die folgenden Schritte:
Bereitstellen zumindest eines Eisenoxid-haltigen und Phosphat-haltigen Stoffs,
Zugeben zumindest eines Aluminiumträgers zu dem zumindest einen Eisenoxid-haltigen und Phosphat-haltigen Stoff und Aufschmelzen des zumindest einen Aluminiumträgers zusammen mit dem zumindest einen Eisenoxid-haltigen und Phosphat-haltigen Stoff zu einer Aluminium-haltigen und gegebenenfalls Aluminiumoxid-haltigen Phosphatschlackenschmelze (4),
Umsetzen der Aluminium-haltigen und gegebenenfalls Aluminiumoxid-haltigen Phosphatschlackenschmelze zu elementarem, gasförmigem Phosphor, Eisen und Al₂O₃-haltiger Schlacke in einem Schmelzgefäß (11),
Abziehen des elementaren, gasförmigen Phosphors und Abstechen des Eisens und der Al₂O₃-haltigen Schlacke, **dadurch gekennzeichnet, dass** in dem Schmelzgefäß (11) unter der Aluminium-haltigen und gegebenenfalls Aluminiumoxid-haltigen Phosphatschlackenschmelze (4) ein Zinnbad als Kathodenkörper (15) angeordnet wird und zumindest ein Anodenkörper (13), bevorzugt aus Graphit, Platin oder Magnetit-Spinell, in die Aluminium-haltige und gegebenenfalls Aluminiumoxid-haltige Phosphatschlackenschmelze (4) eintauchend angeordnet wird und ein Gleichstrom, bevorzugt ein Gleichstrom von 3 V bis 15 V, bevorzugt von 6 V bis 12 V, insbesondere bevorzugt von 8 V bis 10 V, an den Kathodenkörper und den Anodenkörper angelegt oder ein Gleichstrom vom Kathodenkörper (15) und vom Anodenkörper (13) abgenommen wird.

2. Verfahren nach Anspruch 1, **dadurch gekennzeichnet, dass** der zumindest eine Eisenoxid-haltige und Phosphat-haltige Stoff (21) als Phosphatschlackenschmelze (4) in dem Schmelzgefäß (11) bereitgestellt und der zumindest eine Aluminiumträger (7) in die Phosphatschlackenschmelze (4) zugegeben wird.

3. Verfahren nach Anspruch 1, **dadurch gekennzeichnet, dass** als Eisenoxid-haltiger und Phosphat-haltiger Stoff (21) ein Feststoff, insbesondere Klärschlammasche mit einem Kalkträger und/oder Apatit und/oder Phosphaterz, bereitgestellt und dass als der zumindest eine Aluminiumträger (7) festes, metallisches Aluminium zugegeben wird.

4. Verfahren nach Anspruch 1, 2 oder 3, **dadurch gekennzeichnet, dass** der Aluminium-haltigen und gegebenenfalls Aluminiumoxid-haltigen Phosphatschlackenschmelze (4) ein Al₂O₃-Träger zugegeben wird.

5. Verfahren nach einem der Ansprüche 1 bis 4, **dadurch gekennzeichnet, dass** die Basizität als das Gewichtsverhältnis von CaO/SiO₂ der Aluminium-haltigen und gegebenenfalls Aluminiumoxid-haltigen Phosphatschlackenschmelze (4) auf einen Wert von 0,65 bis 1,4, bevorzugt 0,85 bis 1,2 und insbesondere bevorzugt 1 eingestellt wird, bevorzugt durch Zugabe von CaO-Trägern und/oder SiO2-Trägern.

6. Verfahren nach einem der Ansprüche 1 bis 5, **dadurch gekennzeichnet, dass** der Kathodenkörper (15) in einem ersten Bereich (A) des Schmelzgefäßes (11) in einer in einem Teilbereich des Bodens (10) angeordneten Senke (14) in dem Schmelzgefäß (11) angeordnet wird und dass der zumindest eine Anodenkörper (13) in einem zweiten, von dem ersten Bereich (A) verschiedenen Bereich (B) des Schmelzgefäßes (11) angeordnet wird, und dass gasförmiger Phosphor aus dem ersten Bereich (A) und Sauerstoff aus dem zweiten Bereich (B) abgezogen werden.

7. Vorrichtung zur Durchführung des Verfahrens nach einem der Ansprüche 1 bis 6, umfassend ein durch ein feuerfest ausgekleidetes Gehäuse (3) gebildetes Schmelzgefäß (11), eine in dem Schmelzgefäß (11) angeordnete Aluminium-haltige und gegebenenfalls Aluminiumoxid-haltige Phosphatschlackenschmelze (4), einen durch das Gehäuse (3) abgeschlossenen Gasraum über der Phosphatschlackenschmelze (4) sowie eine Aufgabevorrichtung (5) für Eisenoxid-haltige und Phosphat-haltige Stoffe (21) und zumindest eine Abzugsvorrichtung (9) für gasförmigen, elementaren Phosphor, **dadurch gekennzeichnet, dass** die Vorrichtung (1) einen unter der Aluminium-haltigen und gegebenenfalls Aluminiumoxid-haltigen Phosphatschlackenschmelze (4) angeordneten Kathodenkörper (15) und zumindest einen in die Aluminium-haltige und gegebenenfalls Aluminiumoxid-haltige Phosphatschlackenschmelze (4) eintauchenden Anodenkörper (13) aufweist.

8. Vorrichtung nach Anspruch 7, **dadurch gekennzeichnet, dass** die Aufgabevorrichtung (5) ein das Gehäuse (3) durchsetzendes erstes Rohr (6) aufweist, in welchem eine Fördereinrichtung (8), bevorzugt in Form einer Förderschnecke, für zumindest einen Aluminiumträger (7) angeordnet ist.

9. Vorrichtung nach Anspruch 7, **dadurch gekennzeichnet, dass** die Aufgabevorrichtung (5) ein das Gehäuse (3) durchsetzendes erstes Rohr (6) aufweist, in welchem ersten Rohr (6) ein zweites Rohr (19) unter Ausbildung eines Ringspaltes (20), bevorzugt konzentrisch zum ersten Rohr (6), angeordnet ist, wobei eines des ersten (6) und des zweiten Rohrs (19) zur Aufgabe von Eisenoxid-haltigen und Phosphat-haltigen Stoffen (21) und das andere des ersten (6) und zweiten Rohrs (19) zur Aufgabe von Aluminiumträgern (7) ausgebildet ist und wobei das erste Rohr (6) an seinem das Gehäuse (3) durchsetzenden Ende (6a) das zweite Rohr (19) überragt.

10. Vorrichtung nach einem der Ansprüche 7 bis 9, **dadurch gekennzeichnet, dass** der Kathodenkörper (15) in einem ersten Bereich (A) des Schmelzgefäßes (11) in einer im Boden (10) des Schmelzgefäßes (11) angeordneten Senke (14) angeordnet ist und dass der zumindest eine Anodenkörper (13) in einem zweiten, von dem ersten Bereich (A) seitlich beabstandeten Bereich (B) des Schmelzgefäßes (11) angeordnet ist und eine weitere Abzugsvorrichtung (17) in dem zweiten Bereich (B) angeordnet ist.

11. Vorrichtung nach Anspruch 10, **dadurch gekennzeichnet, dass** zwischen dem ersten Bereich (A) und dem zweiten Bereich (B) eine den Gasraum in zwei voneinander getrennte Abschnitte teilende Trennwand (16a) in die Aluminium-haltige und gegebenenfalls Aluminiumoxid-haltige Phosphatschlackenschmelze (4) eintaucht.

12. Vorrichtung nach einem der Ansprüche 7 bis 11, **dadurch gekennzeichnet, dass** der Kathodenkörper (15) von einem Zinnbad gebildet ist.

13. Vorrichtung nach Anspruch 12, **dadurch gekennzeichnet, dass** das Zinnbad in einem in der Senke (14) angeordneten Kohlenstoff-haltigen Körper (18) aufgenommen ist.

14. Vorrichtung nach einem der Ansprüche 7 bis 11, **dadurch gekennzeichnet, dass** der zumindest eine Anodenkörper (13) aus Graphit, Platin oder Magnetit-Spinell gebildet ist.

15. Vorrichtung nach einem der Ansprüche 7 bis 11, **dadurch gekennzeichnet, dass** der zumindest eine Anodenkörper (13) aus einem hochlegierten Stahl gebildet ist, wobei der Stahl bevorzugt mit Platin (16) beschichtet ist.

16. Vorrichtung nach einem der Ansprüche 7 bis 13, **dadurch gekennzeichnet, dass** der zumindest eine Anodenkörper (13) kühlbar ausgebildet ist, bevorzugt durch innen im Anodenkörper (13) angeordnete Kanäle für eine Zinn-Schmelze, eine Salzschmelze oder Natrium-Schmelze oder für eine Gaskühlung, bevorzugt durch Stickstoff oder Argon.

17. Vorrichtung nach einem der Ansprüche 7 bis 14, **dadurch gekennzeichnet, dass** die Vorrichtung (1) Mittel zum Anlegen eines Gleichstroms an den Kathodenkörper (15) und den Anodenkörper (13) aufweist.

18. Vorrichtung nach einem der Ansprüche 7 bis 15, **dadurch gekennzeichnet, dass** die Vorrichtung (1) Mittel zum Abnehmen eines Gleichstroms vom Kathodenkörper (15) und vom Anodenkörper (13) aufweist.

## Claims

1. Method for separating elemental phosphorus from iron oxide-containing and phosphate-containing materials, in particular from waste materials such as sewage sludge (ash), animal meal, bone meal and/or steelworks slag, preferably together with materials such as apatite, phosphate ores and/or phosphorite, comprising at least the following steps:
providing at least one iron oxide- and phosphate-containing material,
adding at least one aluminum carrier to the at least one iron oxide- and phosphate-containing material and melting the at least one aluminum carrier together with the at least one iron oxide- and phosphate-containing material to form an aluminum-containing and optionally aluminum oxide-containing phosphate slag melt (4),
reacting the aluminum-containing and optionally aluminum oxide-containing phosphate slag melt to elemental gaseous phosphorus, iron and an Al₂O₃-containing slag in a melting vessel (11),
drawing off elemental, gaseous phosphorus and tapping off the iron and the Al₂O₃-containing slag,
**characterized in that** a tin bath is arranged as cathode body (15) in the melting vessel (11) under the aluminum-containing and optionally aluminum oxide-containing phosphate slag melt (4) and at least one anode body (13), preferably of graphite, platinum or magnetite spinel, is arranged to be immersed in the aluminum-containing and optionally aluminum oxide-containing phosphate slag melt (4) and a direct current, preferably a direct current of 3 V to 15 V, preferably of 6 V to 12 V, in particular preferably of 8 V to 10 V, is applied to the cathode body and the anode body or a direct current is taken from the cathode body (15) and from the anode body (13).

2. Method according to claim 1, **characterized in that** the at least one iron oxide- and phosphate-containing material (21) is provided as a phosphate slag melt (4) in the melting vessel (11) and the at least one aluminum carrier (7) is added to the phosphate slag melt (4).

3. Method according to claim 1, **characterized in that** a solid material, in particular sewage sludge ash with a lime carrier and/or apatite and/or phosphate ore, is provided as the iron oxide- and phosphate-containing material (21) and that solid, metallic aluminum is added as the at least one aluminum carrier (7).

4. Method according to claim 1, 2 or 3, **characterized in that** an Al₂O₃ carrier is added to the aluminum-containing and optionally aluminum oxide-containing phosphate slag melt (4).

5. Method according to any one of claims 1 to 4, **characterized in that** the basicity, being the weight ratio of CaO/SiO₂, of the aluminum-containing and optionally aluminum oxide-containing phosphate slag melt (4) is adjusted to a value of 0.65 to 1.4, preferably 0.85 to 1.2 and more preferably 1, preferably by addition of CaO carriers and/or SiO₂ carriers.

6. Method according to any one of claims 1 to 5, **characterized in that** the cathode body (15) is arranged in a first region (A) of the melting vessel (11) in a depression (14) arranged in a partial region of the bottom (10) in the melting vessel (11) and that the at least one anode body (13) is arranged in a second region (B) of the melting vessel (11) different from the first region (A), and **in that** gaseous phosphorus is withdrawn from the first region (A) and oxygen is withdrawn from the second region (B).

7. Device for carrying out the method according to any one of claims 1 to 6, comprising a melting vessel (11) formed by a refractory-lined housing (3), a phosphate slag melt (4) containing aluminum and optionally aluminum oxide arranged in the melting vessel (11), a gas chamber closed off by the housing (3) above the phosphate slag melt (4), and a feed device (5) for iron oxide- and phosphate-containing substances (21) and at least one extraction device (9) for gaseous, elemental phosphorus, **characterized in that** the device (1) comprises a cathode body (15) arranged below the aluminum-containing and optionally aluminum oxide-containing phosphate slag melt (4) and at least one anode body (13) immersed in the aluminum-containing and optionally aluminum oxide-containing phosphate slag melt (4).

8. Device according to claim 7, **characterized in that** the feed device (5) comprises a first tube (6) passing through the housing (3), in which a conveying device (8), preferably in the form of a screw conveyor, for at least one aluminum carrier (7) is arranged.

9. Device according to claim 7, **characterized in that** the feed device (5) comprises a first tube (6) passing through the housing (3), in which first tube (6) a second tube (19) is arranged forming an annular gap (20), preferably concentric to the first tube (6), wherein one of the first tube (6) and the second tube (19) is designed for feeding iron oxide and phosphate-containing substances (21) and the other of the first tube (6) and the second tube (19) is designed for feeding aluminum carriers (7), and wherein the first tube (6) projects beyond the second tube (19) at its end (6a) penetrating the housing (3).

10. Device according to any one of claims 7 to 9, **characterized in that** the cathode body (15) is arranged in a first region (A) of the melting vessel (11) in a depression (14) arranged in the bottom (10) of the melting vessel (11), and **in that** the at least one anode body (13) is arranged in a second region (B) of the melting vessel (11) laterally spaced from the first region (A), and a further extraction device (17) is arranged in the second region (B).

11. Device according to claim 10, **characterized in that** between the first region (A) and the second region (B) a separating wall (16a) dividing the gas space into two sections separated from each other is immersed in the aluminum-containing and optionally aluminum oxide-containing phosphate slag melt (4).

12. Device according to any one of claims 7 to 11, **characterized in that** the cathode body (15) is formed by a tin bath.

13. Device according to claim 12, **characterized in that** the tin bath is received in a carbon-containing body (18) disposed in the depression (14).

14. Device according to any one of claims 7 to 11, **characterized in that** the at least one anode body (13) is formed of graphite, platinum or magnetite spinel.

15. Device according to any one of claims 7 to 11, **characterized in that** the at least one anode body (13) is formed of a high-alloy steel, the steel preferably being coated with platinum (16).

16. Device according to one of claims 7 to 13, **characterized in that** the at least one anode body (13) is designed to be coolable, preferably by channels arranged inside the anode body (13) for a tin melt, a salt melt or sodium melt or for gas cooling, preferably by nitrogen or argon.

17. Device according to any one of claims 7 to 14, **characterized in that** the device (1) comprises means for applying a direct current to the cathode body (15) and the anode body (13).

18. Device according to any one of claims 7 to 15, **characterized in that** the device (1) comprises means for taking a direct current from the cathode body (15) and from the anode body (13).

## Revendications

1. Procédé de séparation du phosphore élémentaire à partir de substances contenant de l'oxyde de fer et des phosphates, plus particulièrement à partir de déchets comme des (cendres de) boues d'épuration, des farines animales, des farines d'os et/ou du laitier d'aciérie, de préférence conjointement avec des substances comme de l'apatite, des minerais de phosphate et/ou de la phosphorite, comprenant au moins les étapes suivantes :
mise à disposition d'au moins une substance contenant de l'oxyde de fer et des phosphates,
ajout d'au moins un porteur d'aluminium à l'au moins une substance contenant de l'oxyde de fer et des phosphates et fusion de l'au moins un porteur d'aluminium conjointement avec l'au moins une substance contenant de l'oxyde de fer et des phosphates afin d'obtenir une fonte de laitier de phosphates (4) contenant de l'aluminium et, le cas échéant, de l'oxyde d'aluminium,
transformation de la fonte de scories de phosphates contenant de l'aluminium et, le cas échéant, de l'oxyde d'aluminium en phosphore élémentaire gazeux, fer et laitier contenant du Al₂O₃ dans un creuset (11),
extraction du phosphore élémentaire gazeux et découpage du fer et du laitier contenant du Al₂O₃, **caractérisé en ce que**, dans le creuset (11), sous la fonte de laitier de phosphates (4) contenant de l'aluminium et, le cas échéant, de l'oxyde d'aluminium, est disposé un bain d'étain en tant que corps de cathode (15) et un corps d'anode (13), de préférence en graphite, platine ou un spinelle de type magnétite, est disposé de façon à plonger dans la fonte de laitier de phosphates (4) contenant de l'aluminium et, le cas échéant, de l'oxyde d'aluminium et un courant continu, de préférence un courant continu de 3 V à 15 V, de préférence de 6 V à 12 V, plus particulièrement de préférence de 8 V à 10 V, est appliqué au corps de cathode et au corps d'anode ou un courant continu est prélevé du corps de cathode (15) et du corps d'anode (13).

2. Procédé selon la revendication 1, **caractérisé en ce que** l'au moins une substance contenant de l'oxyde de fer et des phosphates (21) est mise à disposition sous la forme d'une fonte de laitier de phosphates (4) dans le creuset (11) et l'au moins un porteur d'aluminium (7) est ajouté à la fonte de laitier de phosphates (4).

3. Procédé selon la revendication 1, **caractérisé en ce que**, en tant que substance contenant de l'oxyde de fer et des phosphates (21), une substance solide, plus particulièrement des cendres de boues d'épuration avec un porteur de calcaire et/ou de l'apatite et/ou du minerai de phosphate, est mise à disposition et **en ce que**, en tant que l'au moins un porteur d'aluminium (7), un aluminium métallique solide est ajouté.

4. Procédé selon la revendication 1, 2 ou 3, **caractérisé en ce que**, à la fonte de laitier de phosphates (4) contenant de l'aluminium et, le cas échéant, de l'oxyde d'aluminium, est ajouté un porteur de Al₂O₃.

5. Procédé selon l'une des revendications 1 à 4, **caractérisé en ce que** la basicité, en tant que rapport de poids de CaO/SiO₂ de la fonte de laitier de phosphates (4) contenant de l'aluminium et, le cas échéant, de l'oxyde d'aluminium, est ajustée à une valeur de 0,65 à 1,4, de préférence de 0,85 à 1,2 et plus particulièrement de préférence à 1, de préférence par l'ajout de porteurs de CaO et/ou de porteurs de SiO₂.

6. Procédé selon l'une des revendications 1 à 5, **caractérisé en ce que** le corps de cathode (15) est disposé dans le creuset (11), dans une première zone (A) du creuset (11), dans une dépression (14) disposée dans une partie du fond (10), et **en ce que** l'au moins un corps d'anode (13) est disposé dans une deuxième zone (B) différente de la première zone (A), du creuset (11) et **en ce que** du phosphore gazeux est extrait de la première zone (A) et de l'oxygène est extrait de la deuxième zone (B).

7. Dispositif pour l'exécution du procédé selon l'une des revendications 1 à 6, comprenant un creuset (11) constitué d'un boîtier chemisé d'un matériau réfractaire (3), une fonte de laitier de phosphates (4) contenant de l'aluminium et, le cas échéant, de l'oxyde d'aluminium, disposé dans le creuset (11), un compartiment de gaz fermé par le boîtier (3), au-dessus de la fonte de laitier de phosphates (4), ainsi qu'un dispositif d'alimentation (5) pour des substances contenant de l'oxyde de fer et des phosphates (21) et au moins un dispositif d'extraction (9) pour le phosphore élémentaire gazeux, **caractérisé en ce que** le dispositif (1) comprend un corps de cathode (15) disposé sous la fonte de laitier de phosphates (4) contenant de l'aluminium et, le cas échéant, de l'oxyde d'aluminium et au moins un corps d'anode (13) plongeant dans la fonte de laitier de phosphates (4) contenant de l'aluminium et, le cas échéant, de l'oxyde d'aluminium.

8. Dispositif selon la revendication 7, **caractérisé en ce que** le dispositif d'alimentation (5) comprend un premier tube (6) traversant le boîtier (3), dans lequel est disposé un dispositif de convoyage (8), de préférence sous la forme d'une vis sans fin, pour au moins un porteur d'aluminium (7).

9. Dispositif selon la revendication 7, **caractérisé en ce que** le dispositif d'alimentation (5) comprend un premier tube (6) traversant le boîtier (3), un deuxième tube (19) étant disposé dans ce premier tube (6), en formant un interstice annulaire (20), de préférence concentrique par rapport au premier tube (6), dans lequel un parmi le premier (6) et le deuxième tube (19) est conçu pour l'introduction de substances contenant de l'oxyde de fer et des phosphates (21) et l'autre parmi le premier (6) et le deuxième tube (19) est conçu pour l'introduction de porteurs d'aluminium (7) et dans lequel le premier tube (6) dépasse du deuxième tube (19) au niveau de son extrémité (6a) traversant le boîtier (3).

10. Dispositif selon l'une des revendications 7 à 9, **caractérisé en ce que** le corps de cathode (15) est disposé dans une première zone (A) du creuset (11) dans une dépression (14) disposée dans le fond (10) du creuset (11) et **en ce que** l'au moins un corps d'anode (13) est disposé dans une deuxième zone (B) du creuset (11), distante latéralement de la première zone (A), et un autre dispositif d'extraction (17) est disposé dans la deuxième zone (B).

11. Dispositif selon la revendication 10, **caractérisé en ce que**, entre la première zone (A) et la deuxième zone (B), une cloison (16a), divisant le compartiment de gaz en deux parties séparées, plonge dans la fonte de laitier de phosphates (4) contenant de l'aluminium et, le cas échéant, de l'oxyde d'aluminium.

12. Dispositif selon l'une des revendications 7 à 11, **caractérisé en ce que** le corps de cathode (15) est constitué d'un bain d'étain.

13. Dispositif selon la revendication 12, **caractérisé en ce que** le bain d'étain est logé dans un corps contenant du carbone (18), disposé dans la dépression (14).

14. Dispositif selon l'une des revendications 7 à 11, **caractérisé en ce que** l'au moins un corps d'anode (13) est constitué de graphite, de platine ou d'un spinelle de magnétite.

15. Dispositif selon l'une des revendications 7 à 11, **caractérisé en ce que** l'au moins un corps d'anode (13) est constitué d'un acier fortement allié, dans lequel l'acier est revêtu de préférence avec du platine (16).

16. Dispositif selon l'une des revendications 7 à 13, **caractérisé en ce que** l'au moins un corps d'anode (13) est réalisé de façon à pouvoir être refroidi, de préférence avec des canaux, disposés à l'intérieur du corps d'anode (13), pour une fonte d'étain, des sels fondus ou une fonte de sodium ou pour un refroidissement par gaz, de préférence par de l'azote ou de l'argon.

17. Dispositif selon l'une des revendications 7 à 14, **caractérisé en ce que** le dispositif (1) comprend des moyens pour l'application d'un courant continu au corps de cathode (15) et au corps d'anode (13).

18. Dispositif selon l'une des revendications 7 à 15, **caractérisé en ce que** le dispositif (1) comprend des moyens pour le prélèvement d'un courant continu du corps de cathode (15) et du corps d'anode (13).
